# EUROPEAN PATENT SPECIFICATION

(11) **EP 2 830 382 B1**
(45) Date of publication and mention of the grant of the patent: **23.03.2016**
(21) Application number: 13306053.3
(22) Date of filing: 23.07.2013
(51) Int. Cl.: H04W 72/08, H04W 84/04, H04W 88/08, H04B 7/155

(54) **A method for wireless backhaul communication, a radio access unit and a central unit therefor**
Verfahren zur drahtlosen Backhaul Kommunikation, Funkzugriffseinheit und zentrale Einheit dafür
Procédé pour communication dans une liaison terrestre sans fil, unité d'accès radio et unité centrale à cet effet

(43) Date of publication of application: 28.01.2015
(73) Proprietor: ALCATEL LUCENT, 92100 Boulogne-Billancourt (FR)
(72) Inventor: Maier, Simone, 70435 Stuttgart (DE); Pascht, Andreas, 70435 Stuttgart (DE)
(74) Representative: Kleinbub, Oliver

(56) References cited:
- WO-A1-2012/037643
- US-A- 4 777 653
- US-A1- 2009 203 310
- LITTLE S: "Is microwave backhaul up to the 4G task?", IEEE MICROWAVE MAGAZINE, IEEESERVICE CENTER, PISCATAWAY, NJ, US, vol. 10, no. 5, 1 August 2009 (2009-08-01) , pages 67-74, XP011271402, ISSN: 1527-3342, DOI: 10.1109/MMM.2009.932833
- RAHMAN T A ET AL: "Design and performance analysis of adaptive transmit power control in point-to-point microwave link for rain attenuation problem", COMPUTERS AND COMMUNICATION, 2003. (ISCC 2003). PROCEEDINGS. EIGHTH IE EE INTERNATIONAL SYMPOSIUM ON JUNE 30 - JULY 3, 203, PISCATAWAY, NJ, USA,IEEE, 1 January 2003 (2003-01-01), pages 1159-1164, XP010646283, ISBN: 978-0-7695-1961-6
- TAKAO OKUNO ET AL: "AUTOMATIC TRANSMITTING POWER CONTROL FOR OUTAGE-FREE DIGITAL MICROWAVE RADIO", JAPAN TELECOMMUNICATION REVIEW, TELECOMMUNICATIONS ASSOCIATION. TOKYO, JP, vol. 3, no. 1, 1 January 1991 (1991-01-01) , pages 50-59, XP000223897, ISSN: 0915-2334

## Description

### Field of the invention

The invention relates to a method for wireless communication in a communication network, and a radio access unit and a central unit adapted to perform said method.

### Background

Future mobile communication systems will rely on a so-called heterogeneous architecture comprising small cells. To simplify the network planning, the deployment of small cells should be dictated by radio frequency considerations and capacity needs only, and not by access and availability of power and backhaul links. State-of-the-art base station concepts for small cells are composed of two completely separate units. The first unit generates and receives the signals exchanged between the base station and the user terminals. The second unit receives and generates the signals exchanged on the wireless backhaul link between the base station and the core network. The two units are connected via a base band interface using an Ethernet link. Both units not only have a significant power consumption because of the complex architecture and contain a lot of functionality, but also suffer from a high component count and related cost and size.

US-patent application publication 2009/0203310 describes superposition transmission and detection of access and backhaul signals in a wireless communication system. The wireless communication system has a wireless relay and a base station adapted to process wireless access traffic for one or more mobile terminals and to process wireless backhaul traffic. In an embodiment, the base station is configured to generate a super-imposed signal intended for the wireless relay. The wireless relay receives the super-imposed signal and compares the signal to noise ration thereof with at least first and second threshold values. Depending on the comparison results, the wireless relay might send a power-up or power-down request to the base station.

### Summary

The object of the invention is thus to propose a method for wireless communication in a communication network with reduced CAPEX and OPEX costs and complexity and a high degree of local flexibility for the network planning.

A basic idea of embodiments of the invention is to envisage an autonomous radio access unit utilizing a wireless backhaul link. Possible frequency bands for the wireless backhaul link supporting said architecture is the unlicensed 60GHz band or the 75GHz and 85GHz bands. At said frequencies and in general also at other frequencies, the path loss can be quite high and varying, e.g. when it is raining or snowing. Furthermore multipath propagation and fading can occur and time-varying interference from other transmitters needs to be taken into account.

According to state-of-the-art solutions, the only possible way to gain knowledge about the backhaul link is to look at the complete path from a central unit of the core network to the user terminals and back to the central unit of the core network via the radio access unit. In said solutions only the overall accumulated characteristic and influence of both the backhaul link at 60GHz and the link at 2.6GHz between the radio access unit and the user terminals is detectable, but not the wanted individual characteristic of the 60GHz backhaul link.

However, a direct feedback about the backhaul link conditions is favorable so that the controller in the core network can adapt to the changing environmental conditions and thus can improve the overall system performance.

According to embodiments of the invention, it is thus proposed to directly measure the wireless backhaul link characteristics by using a direct feedback path from the radio access unit to the central unit of the core network. In the radio access unit, a small part of the received signal transmitted from the central unit at e.g. 60GHz will be coupled out either before or after the receive filter or duplexer with a directional coupler. Depending on the received signal level, said small part of the received signal may also be coupled out after an additional low noise amplifier. This directional coupler has preferably a low insertion loss and is therefore not disturbing the signal going through the radio access unit to the user terminals. The signal at the coupling port of the directional coupler has a power level of e.g. 20dB less than the signal which is going through it. This feedback signal gets combined with the signal received from the user terminals e.g. at 59.9GHz, and will be amplified before it gets radiated via the air to the central unit. The needed filter in the radio access unit will have a slightly wider bandwidth to allow both the signal at 59.9GHz and the signal at 60GHz to pass through. Since the feedback signal has a much lower power level, it will not degrade the link budget for the signals coming from the user terminals. Also, this additional feedback path is based on passive components and will therefore not increase the overall power consumption. In an alternative embodiment, the additional feedback path comprises an additional low noise amplifier which however only slightly increases the overall power consumption.

The central unit will receive the signals from the user terminals and the feedback signal. After down-conversion it will be evaluated and compared to the signal transmitted from the central unit. By looking at the feedback signal, the central unit will gain knowledge about the backhaul link characteristics, i.e. the attenuation, distortion, and interference from other transmitters. Based on this information the central unit can adapt the transmit signal i.e. the power level, frequency and modulation, or if needed can calculate and apply a pre-distortion. Also in the receive direction, the radio access unit and/or the user terminals can adapt to the varying conditions, i.e. adapt the power level. Thus, the radio access unit and/or the user terminals do not have to send always at full power level leading to a decrease in overall power consumption. Furthermore this direct feedback path will result in a higher availability of the backhaul link and increase the possible system coverage.

The object of the invention is thus achieved by a method for wireless communication in a communication network comprising at least one central unit and at least one radio access unit for wireless connection with user terminals, wherein
- backhaul signals are transmitted between the at least one central unit and the at least one radio access unit via a wireless backhaul link,
- a part of received backhaul signals in downlink is coupled out and amplified in the at least one radio access unit and sent back to the at least one central unit via the wireless backhaul link,
- said part of the received backhaul signals in downlink which is amplified and sent back to the at least one central unit is measured in the at least one central unit,
- and the at least one central unit adapts downlink transmission via the wireless backhaul link based on measurement results of said part of the received backhaul signals in downlink which is amplified and sent back to the at least one central unit.

The object of the invention is furthermore achieved by radio access unit for wireless communication in a communication network comprising a central unit and said radio access unit, wherein said radio access unit is adapted to
- establish wireless connections with user terminals,
- receive backhaul signals from the central unit and transmit backhaul signals to the central unit via a wireless backhaul link,
- couple out a part of the received backhaul signals in downlink,
- and send back said part of the received backhaul signals in downlink after amplification to the at least one central unit via the wireless backhaul link.

The object of the invention is furthermore achieved by a central unit as defined in claim 11.

The invention is described in the following within the frame-work of 3GPP LTE, however the invention is not restricted to 3GPP LTE or enhancements thereof, but can in principle be applied in other networks that use a wireless access like e.g. in WiMAX networks (WiMAX = Worldwide Interoperability for Microwave Access).

Further developments of the invention can be gathered from the dependent claims and the following description.

### Brief description of the figures

In the following the invention will be explained further making reference to the attached drawings.
Fig. 1 schematically shows a first unit for wireless signal exchange with user terminals, which is connected via a baseband interface to a second unit for signal exchange via a wireless backhaul link with a core network.
Fig. 2 schematically shows a backhaul system architecture with a wireless backhaul link and a direct feedback loop for backhaul signals according to an embodiment of the invention.
Fig. 3 schematically shows a radio access unit with a wireless backhaul interface and a feedback loop for backhaul signals according to an embodiment of the invention.
Fig. 4 schematically shows a central unit with a wireless backhaul interface according to an embodiment of the invention.
Fig. 5 schematically shows simulation results for a backhaul signal in downlink and uplink, and for a feedback backhaul signal.

### Description of the embodiments

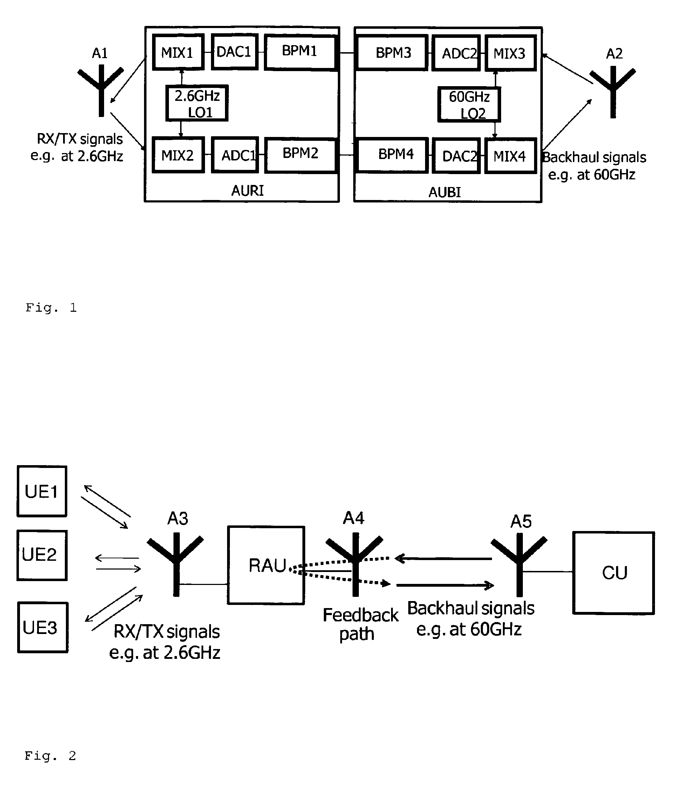

Fig. 1 shows a first access unit AURI with a radio interface, and a second access unit AUBI with a wireless backhaul interface which are interconnected via a baseband interface according to the state-of-the-art.

The first access unit AURI comprises 2 mixers MIX1 and MIX2, an analogue to digital converter ADC1, a digital to analogue converter DAC1, a local oscillator LO1, and 2 baseband processing modules BPM1 and BPM2.

A first input of the first access unit AURI is connected to the first baseband processing module BPM1, which is in turn connected to the digital to analogue converter DAC1. The digital to analogue converter DAC1 is connected to the first mixer MIX1, which is in turn connected to a first output of the first access unit AURI.

A second input of the first access unit AURI is connected to the second mixer MIX2, which is in turn connected to the analogue to digital converter ADC1. The analogue to digital converter ADC1 is connected to the second baseband processing module BPM2, which is in turn connected to a second output of the first access unit AURI.

The local oscillator LO1 is connected both to the first and second mixer MIX1 and MIX2.

The second access unit AUBI comprises 2 mixers MIX3 and MIX4, an analogue to digital converter ADC2, a digital to analogue converter DAC2, a local oscillator L02, and 2 baseband processing modules BPM3 and BPM4.

A first input of the second access unit AUBI is connected to the third mixer MIX3, which is in turn connected to the second analogue to digital converter ADC2. The second analogue to digital converter ADC2 is connected to the third baseband processing module BPM3, which is in turn connected to a first output of the second access unit AUBI.

A second input of the second access unit AUBI is connected to the fourth baseband processing module BPM4, which is in turn connected to the second digital to analogue converter DAC2. The second digital to analogue converter DAC2 is connected to the fourth mixer MIX4, which is in turn connected to a second output of the second access unit AUBI.

The second local oscillator L02 is connected both to the third and fourth mixer MIX3 and MIX4.

The first and second mixer MIX1 and MIX2 of the first access unit AURI are connected to a first antenna A1 for transmitting and receiving of radio signals.

The third and fourth mixer MIX3 and MIX4 of the second access unit AUBI are connected to a second antenna A2 for transmitting and receiving of backhaul signals.

The first baseband processing module BPM1 of the first access unit AURI is connected via an Ethernet interface to the third baseband processing module BPM3 of the second access unit AUBI, and the second baseband processing module BPM2 of the first access unit AURI is connected via an Ethernet interface to the fourth baseband processing module BPM4 of the second access unit AUBI.

The baseband processing modules BPM1-BPM4 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

In the uplink direction, an analogue RF signal, e.g. at 2.55GHz, transmitted from a user terminal is received via the first antenna A1 by the first access unit AURI where it gets mixed down in the second mixer MIX2 using the first local oscillator LO1, converted from analogue to digital domain in the first analogue to digital converter ADC1, and processed in the baseband domain in the second baseband processing module BPM2. In the second baseband processing module BPM2, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the second access unit AUBI.

In the second access unit AUBI the signal gets also processed in the baseband domain in the fourth baseband processing module BPM4, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the second digital to analogue converter DAC2, and then mixed up to the wireless backhaul transmit frequency, e.g. at 60GHz, in the fourth mixer MIX4 using the second local oscillator L02 before the signal is finally radiated into the air via the second antenna A2 and will be received by the central unit, which is not depicted in fig. 1 for the sake of simplicity.

The downlink direction works similar. The central unit transmits an analogue backhaul signal, e.g. at 60.2GHz, which is received by the second access unit AUBI via the second antenna A2, where it gets mixed down in the third mixer MIX3 using the second local oscillator L02, converted from analogue to digital domain in the second analogue to digital converter ADC2, and processed in the baseband domain in the third baseband processing module BPM3. In the third baseband processing module BPM3, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the first access unit AURI via an Ethernet interface.

This baseband signal is then processed in the baseband domain in the first baseband processing module BPM1, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the first digital to analogue converter DAC1, and then mixed up to the radio transmit frequency, e.g. at 2.65GHz, in the first mixer MIX1 using the first local oscillator LO1 before the signal is finally radiated into the air via the first antenna A1 and will be received by a user terminal.

Due to the two completely separated first and second access units AURI and AUBI, this existing architecture is quite complex, has a high component count and therefore a high power consumption, and requires a big size and heavy weight. Furthermore it has a limited data rate. These characteristics are obviously in contrast to the requirements for a completely autonomous wireless cube or metro cell, especially the high power demand.

Furthermore, a direct feedback path for the wireless backhaul link is not available in the existing solution as shown in fig. 1. The only possible way to gain knowledge about the backhaul link is to look at the complete path from the central unit to the user terminals and back to the central unit via the first and second access unit AURI and AUBI. In the solution depicted in fig. 1, only the overall accumulated characteristic and influence of both the backhaul link at e.g. 60GHz and the radio link at e.g. 2.6GHz between the first access unit AURI and the user terminals is detectable, but not the wanted individual characteristic of the 60GHz backhaul link.

Fig. 2 schematically shows a communication network with a backhaul system architecture with a wireless backhaul link and a direct feedback loop for backhaul signals according to an embodiment of the invention.

The communication network comprises a central unit CU, three antennas A3, A4 and A5, a radio access unit RAU, and three user terminals UE1, UE2, and UE3.

The central unit is connected both to a core network, which is not shown in fig. 2 for the sake of simplicity, and to the antenna A5 for a wireless backhaul link at e.g. 60GHz to the radio access unit RAU.

The radio access unit RAU is connected both to the antenna A3 for radio connection at e.g. 2.6GHz to the three user terminals UE1, UE2, and UE3, and to the antenna A4 for a wireless backhaul link at e.g. 60GHz to the central unit CU.

According to an embodiment of the invention, a possibility to directly measure the wireless backhaul link characteristics in downlink is introduced by using a direct feedback path as depicted in fig. 2 by a dotted arrow. A part of the backhaul signals transmitted in downlink from the central unit CU to the radio access unit RAU are coupled out and amplified in the radio access unit RAU, and sent back to the central unit CU.

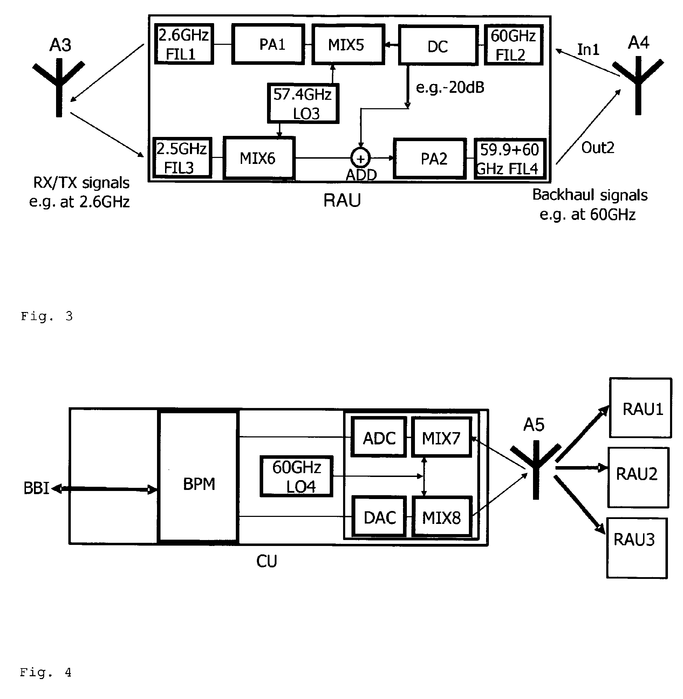

More detailed descriptions of the structure of the radio access unit RAU and the central unit CU depicted in fig. 2 according to embodiments of the invention are shown in fig. 3 and fig. 4 respectively, and will be described in the following.

Fig. 3 schematically shows a radio access unit with a wireless backhaul interface and a feedback loop for backhaul signals according to an embodiment of the invention.

The radio access unit RAU comprises four bandpass filters FIL1-FIL4, two power amplifiers PA1 and PA2, two mixers MIX5 and MIX6, a directional coupler DC, an adder ADD and a local oscillator L03.

A first input of the radio access unit RAU is connected to the second filter FIL2 with a bandpass at 60GHz, which is in turn connected to the directional coupler DC. The directional coupler DC is connected both to the mixer MIX5 and the adder ADD. The mixer MIX5 is further connected to the first power amplifier PA1, which is in turn connected to the first filter FIL1 with a bandpass at 2.6GHz. The first filter FIL1 is connected to a first output of the radio access unit RAU.

A second input of the radio access unit RAU is connected to the third filter FIL3 with a bandpass at 2.5GHz, which is in turn connected to the mixer MIX6. The mixer MIX6 is connected to the adder ADD, which is in turn connected to the second power amplifier PA2. The second power amplifier PA2 is connected to the fourth filter FIL4 with a bandpass covering 59.9GHz and 60GHz, which is in turn connected to a second output of the radio access unit RAU.

The local oscillator L03 with a frequency of 57.4GHz is connected to both mixers MIX5 and MIX6.

The first and third filter FIL1 and FIL3 of the radio access unit RAU are connected to the antenna A3 for transmitting and receiving of radio signals.

The second and fourth filter FIL2 and FIL4 of the radio access unit RAU are connected to the antenna A4 for transmitting and receiving of backhaul signals.

The central unit, which is not depicted in fig. 3 for the sake of simplicity, transmits in downlink analogue backhaul signals, e.g. at 60GHz, which are received by the radio access unit RAU via the antenna A4.

In the radio access unit RAU, the analogue backhaul signals at 60GHz are filtered in the second filter FIL2.

In the directional coupler DC, a small part of the received signals will be coupled out. In an alternative of the embodiment, the directional coupler DC can also be located before the second filter FIL2. The directional coupler DC has a low insertion loss and is therefore not disturbing the signals going through the radio access unit RAU to the user terminals. The signals for feedback at the coupling port of the directional coupler DC have a power level of e.g. 20dB less than the signals which are going through the directional coupler DC.

The signals in downlink are sent to the mixer MIX5, in which the signals are mixed down to 2.6GHz using the signals from the local oscillator L03 at 57.4GHz.

Then, the downlink signals at 2.6GHz are amplified in the first amplifier PA1, and filtered in the first filter FIL1 before they get radiated via the antenna A3 to the user terminals.

In uplink, analogue RF signals, e.g. at 2.5GHz, transmitted from user terminals are received via the antenna A3 by the radio access unit RAU, where they get filtered in the third filter FIL3 and then mixed up to 59.9 GHz in the mixer MIX6 using the signals from the local oscillator L03 at 57.4GHz.

The uplink signals at 59.9GHz get combined in the adder ADD with the feedback signals from the directional coupler DC, and will be amplified in the second power amplifier PA2 resulting in combined signals. Said combined signals are filtered in the fourth filter FIL4 before they get radiated via the antenna A4 to the central unit. The fourth filter FIL4 will have a slightly wider bandwidth than the other filters FIL1-FIL3 to allow both the uplink signals at 59.9GHz and the feedback signals at 60GHz to pass through. Since the feedback signals have a much lower power level than the uplink signals from the user terminals, they will not degrade the link budget for the uplink signals coming from the user terminals. Also this additional feedback path is based on passive components and will therefore not increase the overall power consumption.

The directional coupler DC in fig. 3 with 20dB coupling is only an example. If the link loss of the backhaul link is higher in a deployment scenario, e.g. if the link distance of the backhaul link is larger, than the coupling ratio of the directional coupler DC to lower values of e.g. 10dB or 6dB. The following power amplifier PA2, or maybe also an additional power amplifier in the feedback path before the adder ADD, will increase the power level and at least partly compensate for the link loss.

For the fourth filter FIL4, a highly selective bragg-filter or a dielectric resonator filter can be used at said high backhaul frequencies. In an alternative of the embodiment, an architecture with two local oscillators and two local oscillator signals at different frequencies can be used in order to have a higher frequency distance between the frequencies of the uplink signals and the feedback signals to relax the filter requirements of the fourth filter FIL4.

The central station will receive the uplink signals from the user terminals and the feedback signals. The feedback signals will be evaluated and compared to the transmitted backhaul signals to gain knowledge about the backhaul link characteristics, which will be described in more detail in the following.

Fig. 4 schematically shows a central unit with a wireless backhaul interface according to an embodiment of the invention.

The central unit CU comprises a baseband processing module BPM, an analogue to digital converter ADC, a digital to analogue converter DAC, two mixers MIX7 and MIX8, and a local oscillator LO4.

An input of the central unit CU is connected to the mixer MIX7, which is in turn connected to the analogue to digital converter ADC. The analogue to digital converter ADC is connected to the baseband processing module BPM, which is in turn connected to a backbone interface BBI. The baseband processing module BPM is further connected to the digital to analogue converter DAC, which is in turn connected to the mixer MIX8. The mixer MIX8 is connected to an output of the central unit CU.

The two mixers MIX7 and MIX8 of the central unit CU are connected to the antenna A5 for exchanging backhaul signals with radio access units RAU1-RAU3 as e.g. depicted in fig. 3 and described above via a wireless backhaul link.

The baseband processing module BPM may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The central unit CU receives via the backbone interface from the core network downlink signals which shall be transmitted to the user terminals. The downlink signals are coded and modulated in the baseband processing module, converted into the analogue domain in the digital to analogue converter DAC, and mixed up in the mixer MIX8 using the signals from the local oscillator L04 at 60GHz. Then, the downlink signals are transmitted to the respective radio access unit RAU1-RA3 via the antenna A5 and a wireless backhaul link.

The central unit CU receives from the radio access units RAU1-RAU3 the uplink signals originated from the user terminals and the feedback signals as described above. The uplink signals and the feedback signals will be mixed down in the mixer MIX7 using the signals from the local oscillator L04 at 60GHz. After downmixing, the uplink signals and the feedback signals are converted into the digital domain in the analogue to digital converter ADC, and are sent to the baseband processing module BPM.

In the baseband processing module BPM, the uplink signals and the feedback signals are demodulated and decoded, the uplink signals are transmitted to the core network via the backbone interface BBI, and the feedback signals are compared with the transmitted downlink signals. By looking at the feedback signals, the central unit CU will gain knowledge about the backhaul link characteristics, i.e. the attenuation, distortion, and interference from other transmitters. Based on said information, the central unit CU can adapt the transmit signal, i.e. the power level, frequency and modulation or if needed can calculate and apply a pre-distortion.

In an embodiment of the invention, a control of the power level of the transmit signal in the central unit CU can be performed according to the following steps:
- Detection of the received power level of the feedback signal in the digital domain is performed in the baseband processing module BPM by power calculations. In an alternative of the embodiment depicted in fig. 4, the received power level of the feedback signal is detected in an analogue domain with a power detector.
- Comparison of the received power level of the feedback signal with a reference power level e.g. known from link level calculations or obtained by calibrations is performed in the baseband processing module BPM.
- If the received power level of the feedback signal is greater than the reference power level plus a tolerance value, then the transmit power level is decreased until the received power level is in the range between the reference power level plus the tolerance value and the reference power level minus the tolerance value.
- If the received power level is smaller than the reference power level minus a tolerance value, then the transmit power level is increased until the received power level is in the range between the reference power level plus the tolerance value and the reference power level minus the tolerance value.

Said control of the power level of the transmit signal in the central unit CU can be performed either based on a continuous tracking of the received power level, or only at certain points in time, or only when a need for improvement is detected and signalled by a user terminal or the network.

In a further embodiment of the invention, a control of a distortion of the transmit signal in the central unit CU can be performed according to the following steps:
- Detection of the feedback signal in the digital domain is performed in the baseband processing module BPM.
- Comparison of the received feedback signal with the transmitted signal in amplitude and phase in the time domain is performed in the baseband processing module BPM.
- Calculation of distortions is performed in the baseband processing module BPM based on said comparison.
- Calculation of pre-distortion coefficients to compensate for said distortions is performed in the baseband processing module BPM.
- Application of the pre-distortion algorithm, i.e. pre-distortion coefficients, to future transmit signals to pre-compensate for the distortions on the backhaul link is performed in the baseband processing module BPM.

Said control of the distortion of the transmit signal in the central unit CU can be performed either based on a continuous tracking of the received feedback signal, or only at certain points in time, or only when a need for improvement is detected and signalled by a user terminal or the network.

Also in the receive direction, the radio access unit RAU and/or the user terminals can adapt to the varying conditions, i.e. adapt the power level in an analogue way. Thus, the radio access unit RAU and/or the user terminals do not have to send always at full power level leading to a decrease of the overall power consumption. Furthermore said direct feedback path as described above will result in a higher availability of the backhaul link and increase the possible system coverage.

In an embodiment of the invention, in order to avoid that in the radio access unit RAU in fig. 3 the feedback signal transmitted in uplink at 60GHz disturbs the received downlink analogue backhaul signal which is on the same frequency, e.g. a circulator between the antenna A4 and the filters FIL2 and FIL4 is used, so that the feedback signal to be transmitted is not coupled back into the receiver. As an alternative, two antennas can be used instead of the only one antenna A4. One antenna for transmission connected with the fourth filter FIL4, the other antenna for receiving connected with the second filter FIL2, the two antennas having different polarizations or high directivities with high side lobes suppression so that the transmit signal will be hardly received by the antenna for receiving and therefore is not disturbing the wanted downlink analogue backhaul signal.

In a further embodiment of the invention, a circulator as described above can also be used in the central unit CU in fig. 4 between the antenna A5 and the two mixers MIK7 and MIX8 in order to avoid that the transmitted downlink analogue backhaul signal at 60GHz disturbs the received feedback signal which is on the same frequency. Also, as an alternative, two antennas can be used instead of the only one antenna A5. One antenna for transmission connected with the mixer MIX8, the other antenna for receiving connected with the mixer MIX7, the two antennas having different polarizations or high directivities with high side lobes suppression so that the transmit signal will be hardly received by the antenna for receiving and therefore is not disturbing the wanted feedback signal.

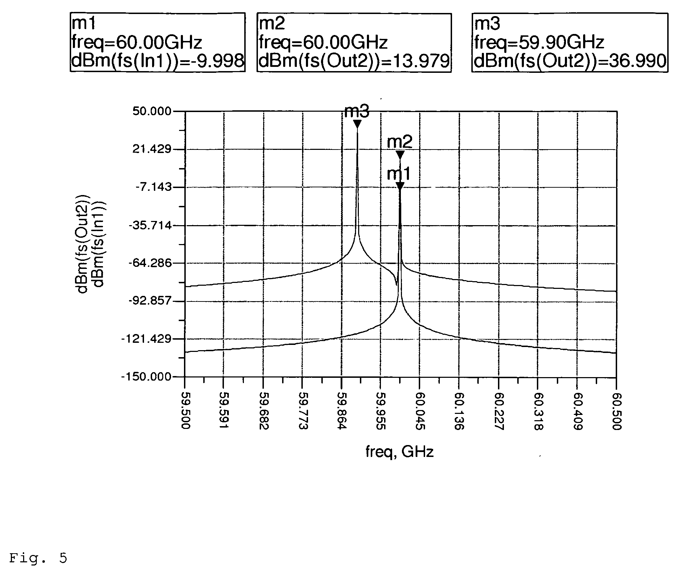

Fig. 5 schematically shows simulation results for a backhaul signal in downlink and uplink, and for a feedback backhaul signal.

In the diagram in fig. 5, the power in dBm of the backhaul signal in downlink and uplink, and of the feedback backhaul signal received at the radio access unit RAU or transmitted from the radio access unit RAU is depicted over the signal frequency in GHz.

The power of the backhaul signal in uplink at 60 GHz, which is depicted as Inl in fig. 3, is marked with m1 in the diagram and is as high as -9.998 dBm. The power of the feedback backhaul signal in downlink at 60 GHz, which is depicted as Out2 in fig. 3, is marked with m2 in the diagram and is as high as 13.979 dBm. The power of the backhaul signal in downlink at 59.9 GHz, which is also depicted as Out2 in fig. 3, is marked with m3 in the diagram and is as high as 36.990 dBm.

It can be seen, that the incoming signal Inl into the radio access unit RAU and then the signal to be sent back to the central unit Out2 have the required high signal-to-noise ratio and are therefore clearly detectable.

## Claims

1. A method for wireless communication in a communication network comprising at least one central unit (CU) and at least one radio access unit (RAU) for wireless connection with user terminals (UE1, UE2, UE3), wherein
• backhaul signals are transmitted between the at least one central unit (CU) and the at least one radio access unit (RAU) via a wireless backhaul link,
• a part of received backhaul signals in downlink is coupled out and amplified in the at least one radio access unit (RAU) and sent back to the at least one central unit (CU) via the wireless backhaul link,
• said part of the received backhaul signals in downlink which is amplified and sent back to the at least one central unit (CU) is measured in the at least one central unit (CU),
• and the at least one central unit (CU) adapts downlink transmission via the wireless backhaul link based on measurement results of said part of the received backhaul signals in downlink which is amplified and sent back to the at least one central unit (CU).

2. A method according to claim 1, wherein
• the at least one central unit (CU) transmits information based on said measurement results to at least one of a group of the at least one radio access unit (RAU) and at least one user terminal (UE1, UE2, UE3),
• and at least one of the group of the at least one radio access unit (RAU) and the at least one user terminal (UE1, UE2, UE3) adapts wireless transmission based on said information.

3. A method according to any of the preceding claims, wherein a coupling ratio for coupling out said part of the received backhaul signals in downlink in the at least one radio access unit (RAU) is adjusted dependent on a link loss of the wireless backhaul link.

4. A method according to any of the preceding claims, wherein a coupling ratio for coupling out said part of the received backhaul signals in downlink in the at least one radio access unit (RAU) is adjusted so that said part of the received backhaul signals in downlink which is amplified and sent back to the at least one central unit (CU) does not disturb uplink signals.

5. A method according to any of the preceding claims, wherein at least one of the group of a bragg-filter, a dielectric resonator filter and a waveguide filter is used in the at least one central unit (CU) to separate uplink signals from said part of the received backhaul signals in downlink which is amplified and sent back to the at least one central unit (CU).

6. A method according to any of the preceding claims, wherein a circulator is used between the at least one radio access unit (RAU) and an antenna (A4) for the wireless backhaul link.

7. A method according to any of the preceding claims, wherein a circulator is used between the at least one central unit (CU) and an antenna (A5) for the wireless backhaul link.

8. A method according to any of the preceding claims, wherein a first antenna for receiving and a second antenna for transmitting is used in the at least one radio access unit (RAU) for the wireless backhaul link, said first and second antenna having different polarizations or directivities.

9. A method according to any of the preceding claims, wherein a first antenna for receiving and a second antenna for transmitting is used in the at least one central unit (CU) for the wireless backhaul link, said first and second antenna having different polarizations.

10. A radio access unit (RAU) for wireless communication in a communication network comprising a central unit (CU) and said radio access unit (RAU), wherein said radio access unit (RAU) is adapted to
• establish wireless connections with user terminals (UE1, UE2, UE3),
• receive backhaul signals from the central unit (CU) and transmit backhaul signals to the central unit (CU) via a wireless backhaul link,
• couple out a part of the received backhaul signals in downlink,
• and send back said part of the received backhaul signals in downlink after amplification to the at least one central unit (CU) via the wireless backhaul link.

11. A central unit (CU) for wireless communication in a communication network comprising a radio access unit (RAU) and said central unit (CU), wherein said central unit (CU) is adapted to
• transmit backhaul signals to the radio access unit (RAU) via a wireless backhaul link,
• receive fed back backhaul signals which have been transmitted in downlink by the central unit (CU) to the radio access unit (RAU), and which have been coupled out, amplified and sent back to the central unit (CU) by the radio access unit (RAU),
• compare the received fed back backhaul signals with said transmitted backhaul signals in downlink and/or a power level of the received fed back backhaul signals with a reference power level, and
• adapt downlink transmission via the wireless backhaul link based on said comparison.

12. A communication network for mobile communication comprising at least one radio access unit (RAU) according to claim 10 and at least one central unit (CU) according to claim 11.

## Patentansprüche

1. Verfahren für drahtlose Kommunikation in einem Kommunikationsnetzwerk, umfassend mindestens eine Zentraleinheit (CU) und mindestens eine Funkzugangseinheit (RAU) für eine drahtlose Verbindung mit Benutzerendgeräten (UE1, UE2, UE3), wobei
• Backhaul-Signale zwischen der mindestens einen Zentraleinheit (CU) und der mindestens einen Funkzugangseinheit (RAU) über eine drahtlose Backhaul-Verbindung übertragen werden,
• ein Teil von empfangenen Backhaul-Signalen in Abwärtsrichtung ausgekoppelt und in der mindestens einen Funkzugangseinheit (RAU) verstärkt und an die mindestens eine Zentraleinheit (CU) über die drahtlose Backhaul-Verbindung zurückgesendet wird,
• besagter Teil der empfangenen Backhaul-Signale in Abwärtsrichtung, der verstärkt und an die mindestens eine Zentraleinheit (CU) zurückgesendet wird, in der mindestens einen Zentraleinheit (CU) gemessen wird,
• und die mindestens eine Zentraleinheit (CU) die Übertragung in Abwärtsrichtung über die drahtlose Backhaul-Verbindung basierend auf Messergebnissen des besagten Teils der empfangenen Backhaul-Signale in Abwärtsrichtung, der verstärkt und an die mindestens eine Zentraleinheit (CU) zurückgesendet wird, anpasst.

2. Verfahren nach Anspruch 1, wobei
• die mindestens eine Zentraleinheit (CU) Informationen basierend auf besagten Messergebnissen an mindestens Eines aus einer Gruppe der mindestens einen Funkzugangseinheit (RAU) und mindestens eines Benutzerendgeräts (UE1, UE2, UE3) überträgt,
• und mindestens Eines aus der Gruppe der mindestens einen Funkzugangseinheit (RAU) und des mindestens einen Benutzerendgeräts (UE1, UE2, UE3) die drahtlose Übertragung basierend auf besagten Informationen anpasst.

3. Verfahren nach einem beliebigen der vorstehenden Ansprüche, wobei ein Kopplungsverhältnis zum Auskoppeln des besagten Teils der empfangenen Backhaul-Signale in Abwärtsrichtung in der mindestens einen Funkzugangseinheit (RAU) in Abhängigkeit von einem Verbindungsverlust der drahtlosen Backhaul-Verbindung angepasst wird.

4. Verfahren nach einem beliebigen der vorstehenden Ansprüche, wobei ein Kopplungsverhältnis zum Auskoppeln des besagten Teils der empfangenen Backhaul-Signale in Abwärtsrichtung in der mindestens einen Funkzugangseinheit (RAU) angepasst wird, so dass der besagte Teil der empfangenen Backhaul-Signale in Abwärtsrichtung, der verstärkt und an die mindestens eine Zentraleinheit (CU) zurückgesendet wird, keine Signale in Aufwärtsrichtung stört.

5. Verfahren nach einem beliebigen der vorstehenden Ansprüche, wobei mindestens Eines aus der Gruppe eines Bragg-Filters, eines dielektrischen Resonator-Filters und eines Wellenleiterfilters in der mindestens einen Zentraleinheit (CU) verwendet wird, um Signale in Aufwärtsrichtung vom besagten Teil der empfangenen Backhaul-Signale in Abwärtsrichtung, der verstärkt und an die mindestens eine Zentraleinheit (CU) zurückgesendet wird, zu trennen.

6. Verfahren nach einem beliebigen der vorstehenden Ansprüche, wobei ein Zirkulator zwischen der mindestens einen Funkzugangseinheit (RAU) und einer Antenne (A4) für die drahtlose Backhaul-Verbindung verwendet wird.

7. Verfahren nach einem beliebigen der vorstehenden Ansprüche, wobei ein Zirkulator zwischen der mindestens einen Zentraleinheit (CU) und einer Antenne (A5) für die drahtlose Backhaul-Verbindung verwendet wird.

8. Verfahren nach einem beliebigen der vorstehenden Ansprüche, wobei eine erste Antenne zum Empfangen und eine zweite Antenne zum Senden in der mindestens einen Funkzugangseinheit (RAU) für die drahtlose Backhaul-Verbindung verwendet werden, wobei besagte erste und zweite Antenne unterschiedliche Polarisationen oder Richtfaktoren aufweisen.

9. Verfahren nach einem beliebigen der vorstehenden Ansprüche, wobei eine erste Antenne zum Empfangen und eine zweite Antenne zum Senden in der mindestens einen Zentraleinheit (CU) für die drahtlose Backhaul-Verbindung verwendet werden, wobei besagte erste und zweite Antenne unterschiedliche Polarisationen aufweisen.

10. Funkzugangseinheit (RAU) für drahtlose Kommunikation in einem Kommunikationsnetzwerk, umfassend eine Zentraleinheit (CU) und besagte Funkzugangseinheit (RAU), wobei besagte Funkzugangseinheit (RAU) angepasst ist, um
• drahtlose Verbindungen mit Benutzerendgeräten (UE1, UE2, UE3) aufzubauen,
• über eine drahtlose Backhaul-Verbindung Backhaul-Signale von der Zentraleinheit (CU) zu empfangen und Backhaul-Signale an die Zentraleinheit (CU) zu senden,
• einen Teil der empfangenen Backhaul-Signale in Abwärtsrichtung auszukoppeln,
• und den besagten Teil der empfangenen Backhaul-Signale in Abwärtsrichtung nach Verstärkung an die mindestens eine Zentraleinheit (CU) über die drahtlose Backhaul-Verbindung zurückzusenden.

11. Zentraleinheit (CU) für drahtlose Kommunikation in einem Kommunikationsnetzwerk, umfassend eine Funkzugangseinheit (RAU) und besagte Zentraleinheit (CU), wobei besagte Zentraleinheit (CU) angepasst ist, um
• über eine drahtlose Backhaul-Verbindung Backhaul-Signale an die Funkzugangseinheit (RAU) zu senden,
• rückgekoppelte Backhaul-Signale zu empfangen, die in Abwärtsrichtung von der Zentraleinheit (CU) an die Funkzugangseinheit (RAU) gesendet wurden, und die ausgekoppelt, verstärkt und an die Zentraleinheit (CU) von der Funkzugangseinheit (RAU) zurückgesendet wurden,
• die empfangenen rückgekoppelten Backhaul Signale mit den besagten gesendeten Backhaul-Signalen in Abwärtsrichtung und/oder einen Leistungspegel der empfangenen rückgekoppelten Backhaul-Signale mit einem Referenzleistungspegel zu vergleichen, und
• die Übertragung in Abwärtsrichtung über die drahtlose Backhaul-Verbindung basierend auf dem besagten Vergleich anzupassen.

12. Kommunikationsnetzwerk für mobile Kommunikation, umfassend mindestens eine Funkzugangseinheit (RAU) nach Anspruch 10 und mindestens eine Zentraleinheit (CU) nach Anspruch 11.

## Revendications

1. Procédé de communication sans fil dans un réseau de communication comprenant au moins une unité centrale (UC) et au moins une unité d'accès radio (RAU) pour une connexion sans fil avec des terminaux utilisateurs (UE1, UE2, UE3), dans lequel
• des signaux de liaison terrestre sont transmis entre l'au moins une unité centrale (UC) et l'au moins une unité d'accès radio (RAU) par l'intermédiaire d'une liaison terrestre sans fil,
• une partie des signaux de liaison terrestre reçus en liaison descendante est couplée en sortie et amplifiée dans l'au moins une unité d'accès radio (RAU) puis renvoyée vers l'au moins une unité centrale (UC) par l'intermédiaire de la liaison terrestre sans fil,
• ladite partie des signaux de liaison terrestre reçus en liaison descendante qui est amplifiée et renvoyée à l'au moins une unité centrale (UC) est mesurée dans l'au moins une unité centrale (UC),
• et l'au moins une unité centrale (UC) adapte la transmission descendante par l'intermédiaire de la liaison terrestre sans fil sur la base des résultats de mesure de ladite partie des signaux de liaison terrestre reçus en liaison descendante qui est amplifiée et renvoyée à l'au moins une unité centrale (UC).

2. Procédé selon la revendication 1, dans lequel
• l'au moins une unité centrale (UC) transmet des informations sur la base desdits résultats de mesure vers au moins un élément parmi le groupe constitué de l'au moins une unité d'accès radio (RAU) et d'au moins un terminal utilisateur (UE1, UE2, UE3),
• et au moins un élément parmi le groupe constitué de l'au moins une unité d'accès radio (RAU) et de l'au moins un terminal utilisateur (UE1, UE2, UE3) adapte la transmission sans fil sur la base desdites informations.

3. Procédé selon l'une quelconque des revendications précédentes, dans lequel un rapport de couplage pour coupler en sortie ladite partie des signaux de liaison terrestre reçus en liaison descendante dans l'au moins une unité d'accès radio (RAU) est ajusté en fonction d'une perte de liaison de la liaison terrestre sans fil.

4. Procédé selon l'une quelconque des revendications précédentes, dans lequel un rapport de couplage pour coupler en sortie ladite partie des signaux de liaison terrestre reçus en liaison descendante dans l'au moins une unité d'accès radio (RAU) est ajusté de sorte que ladite partie des signaux de liaison terrestre reçus en liaison descendante qui est amplifiée et renvoyée à l'au moins une unité centrale (UC) ne perturbe pas des signaux montants.

5. Procédé selon l'une quelconque des revendications précédentes, dans lequel au moins un élément parmi le groupe constitué d'un filtre de Bragg, d'un filtre de résonateur diélectrique et d'un filtre de guide d'ondes est utilisé dans l'au moins une unité centrale (UC) pour séparer des signaux montants de ladite partie des signaux de liaison terrestre reçus en liaison descendante qui est amplifiée et renvoyée à l'au moins une unité centrale (UC).

6. Procédé selon l'une quelconque des revendications précédentes, dans lequel un circulateur est utilisé entre l'au moins une unité d'accès radio (RAU) et une antenne (A4) pour la liaison terrestre sans fil.

7. Procédé selon l'une quelconque des revendications précédentes, dans lequel un circulateur est utilisé entre l'au moins une unité centrale (UC) et une antenne (A5) pour la liaison terrestre sans fil.

8. Procédé selon l'une quelconque des revendications précédentes, dans lequel une première antenne pour recevoir et une deuxième antenne pour transmettre sont utilisées dans l'au moins une unité d'accès radio (RAU) pour la liaison terrestre sans fil, lesdites première et deuxième antennes présentant des polarisations ou des directivités différentes.

9. Procédé selon l'une quelconque des revendications précédentes, dans lequel une première antenne pour recevoir et une deuxième antenne pour transmettre sont utilisées dans l'au moins une unité centrale (UC) pour la liaison terrestre sans fil, lesdites première et deuxième antennes présentant des polarisations différentes.

10. Unité d'accès radio (RAU) pour une communication sans fil dans un réseau de communication comprenant une unité centrale (UC) et ladite unité d'accès radio (RAU), ladite unité d'accès radio (RAU) étant adaptée pour
• établir des connexions sans fil avec des terminaux utilisateurs (UE1, UE2, UE3),
• recevoir des signaux de liaison terrestre à partir de l'unité centrale (UC) et transmettre des signaux de liaison terrestre à l'unité centrale (UC) par l'intermédiaire d'une liaison terrestre sans fil,
• coupler en sortie une partie des signaux de liaison terrestre reçus en liaison descendante,
• et renvoyer ladite partie des signaux de liaison terrestre reçus en liaison descendante après l'amplification à l'au moins une unité centrale (UC) par l'intermédiaire de la liaison terrestre sans fil.

11. Unité centrale (UC) pour une communication sans fil dans un réseau de communication comprenant une unité d'accès radio (RAU) et ladite unité centrale (UC), ladite unité centrale (UC) étant adaptée pour
• transmettre des signaux de liaison terrestre à l'unité d'accès radio (RAU) par l'intermédiaire d'une liaison terrestre sans fil,
• recevoir des signaux de liaison terrestre renvoyés qui ont été transmis en liaison descendante par l'unité centrale (UC) à l'unité d'accès radio (RAU) et qui ont été couplés en sortie, amplifiés et renvoyés à l'unité centrale (UC) par l'unité d'accès radio (RAU),
• comparer les signaux de liaison terrestre renvoyés reçus auxdits signaux de liaison terrestre transmis en liaison descendante et/ou un niveau de puissance des signaux de liaison terrestre renvoyés reçus à un niveau de puissance de référence, et
• adapter une transmission descendante par l'intermédiaire de la liaison terrestre sans fil sur la base de ladite comparaison.

12. Réseau de communication pour une communication mobile comprenant au moins une unité d'accès radio (RAU) selon la revendication 10 et au moins une unité centrale (UC) selon la revendication 11.
